# EUROPEAN PATENT APPLICATION

(11) **EP 1 686 808 A2**
(43) Date of publication of application: **02.08.2006**
(21) Application number: 06100983.3
(22) Date of filing: 27.01.2006
(51) Int. Cl.: H04N 7/24

(54) **Device and Method for Selecting Contents and Reproducing/Recording Selected Contents**

(30) Priority: 29.01.2005 KR 2005008351
(71) Applicant: Samsung Electronics Co., Ltd., Yeongtong-gu Suwon-si, Gyeonggi-do (KR)
(72) Inventor: HAN, Sang-jun, Seoul (KR)
(74) Representative: Waddington, Richard

(57) **Abstract**

Provided are a multimedia reproducing/recording device and a method of selecting a multimedia reproducing/recording device and multimedia contents and reproducing/recording the multimedia contents more quickly and easily. The method includes: receiving a numeric code from an external source; and interpreting the numeric code and extracting a device identifier (102) corresponding to a predetermined reproducing/recording device and/or a contents identifier corresponding to contents to be reproduced/recorded by the reproducing/recording device. Method further includes activating the reproducing/recording device using the device identifier (102); and selecting contents to be reproduced/recorded using the contents identifier and reproducing/recording the contents. In addition, the method further includes: receiving a device activation command that contains the device identifier (102); and receiving a contents reproducing/recording command that contains the contents identifier. Since the method is simple and easy, a user can easily use an AV device without having to learn a complicated method of selecting contents using menus and remote control keys.

## Description

Apparatuses and methods consistent with the present invention relate to reproduction and recording of multimedia contents, and more particularly, to selecting a multimedia reproducing/recording device and multimedia contents and reproducing/recording the multimedia contents more quickly and easily.

Multimedia devices include terrestrial televisions, satellite set top boxes (STBs), digital television (DTV) STBs, digital versatile disc (DVD) players, audio-visual hard disk drivers (AV-HDDs), compact disc (CD) players, FM receivers, and personal video recorders (PVRs), all of which reproduce or record audio-visual data, i.e., multimedia contents. Hereinafter, a multimedia device is referred to as an audio-visual (AV) device to denote that it is to be used for reproducing/recording audio-visual images.

Generally, reproducing or recording multimedia contents using an AV device involves selecting an AV device to reproduce/record multimedia contents and selecting a channel or contents in the selected AV device.

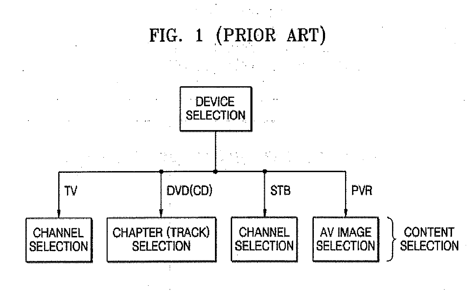

FIG. 1 illustrates a conventional method of selecting contents and reproducing/recording the contents. Referring to FIG. 1, the selection of contents includes 1) selecting an AV device to reproduce contents from a plurality of AV devices connected to a home network and 2) selecting a desired channel, an audio-visual image, a DVD chapter, or a CD track in the selected AV device.

The selection of contents using a general reproducing/recording device not connected to the home network, includes 1) selecting a desired AV device by choosing an external input number corresponding to the desired AV device through TV input selection and 2) selecting a desired channel, an audio-visual image, a DVD chapter, or a CD track in the selected AV device.

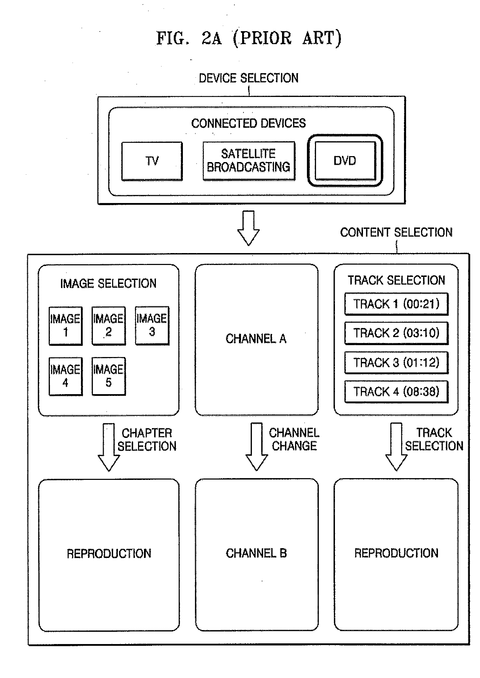

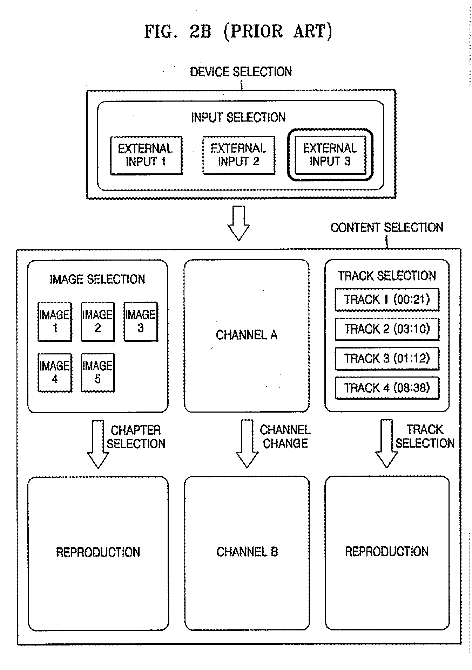

FIGS. 2A and 2B illustrate examples of the conventional method of selecting contents. More specifically, FIGS. 2A and 2B illustrate menu screens for selecting an AV device and selecting contents such as a channel, an audio-visual image, a DVD chapter or a CD track according to the type of the selected AV device. Usually, on-screen display (OSD) menus displayed on a screen where audio-visual images are being reproduced, are used.

According to the conventional method of selecting contents described above, a user has to search menus several times and manipulate several remote control keys to view multimedia contents. However, people who are unfamiliar with OSD menus and manipulating remote control keys have difficulty learning how to use complicated menus. Even though they learn how to use the menus, they tend to easily forget how. In addition, it is very cumbersome for those who usually use only specific contents or a fraction of functions to learn such complicated menus.

On the other hand, people who are familiar with OSD menus may wish to select contents more quickly. Therefore, it is very inefficient for them to use such OSD menus and complicated remote control keys.

The present invention provides a multimedia reproducing/recording device and a method of selecting a multimedia reproducing/recording device and multimedia contents and reproducing/recording the multimedia contents more quickly and easily.

In other words, the present invention provides a simple and easy method of selecting contents so that a user can easily use an AV device without having to learn a complicated method of selecting contents using menus and remote control keys.

According to the present invention there is provided an apparatus and method as set forth in the appended claims. Preferred features of the invention will be apparent from the dependent claims, and the description which follows.

According to an aspect of the present invention, there is provided a method of selecting contents and reproducing/recording the selected contents. The method includes: (a) receiving a numeric code from an external source; and (b) interpreting the numeric code and extracting a device identifier corresponding to a predetermined reproducing/recording device and/or a contents identifier corresponding to contents to be reproduced/recorded by the reproducing/recording device.

The method further includes: (c1) activating the reproducing/recording device using the device identifier; and (d1) selecting contents to be reproduced/recorded using the contents identifier and reproducing/recording the contents, or (c2) receiving a device activation command that contains the device identifier; and (d2) receiving a contents reproducing/recording command that contains the contents identifier.

The numeric code may include unique identification numbers assigned to the reproducing/recording device and the contents to be reproduced/recorded, respectively.

Each digit of the numeric code may contain information regarding whether a new reproducing/recording device will be activated and contents will be selected in the new reproducing/recording device or whether a currently activated reproducing/recording device will continue to be used and contents will be selected in the currently activated reproducing/recording device.

Even when an identical number is used in a portion of the numeric code for indicating contents, the identical number may have different meanings according to a reproducing/recording device selected and indicate a channel number, a chapter number, a track number, or a recording number according to the selected reproducing/recording device.

According to another aspect of the present invention, there is provided a reproducing/recording device for selecting contents and reproducing the selected contents. The device includes: a number processing unit for receiving a numeric code from an external source, interpreting the numeric code, extracting a device identifier and/or a contents identifier, comparing the extracted device identifier with a device identifier of the reproducing/recording device itself, activating the reproducing/recording device if the extracted device identifier matches the device identifier of the reproducing/recording device, and selecting contents to be reproduced/recorded using the contents identifier; and a reproducing unit for reproducing the selected contents using the activated reproducing/recording device.

The device may further include a network interface for receiving a device activation command that contains the device identifier and a contents reproducing/recording command that contains the contents identifier.

According to another aspect of the present invention, there is provided a home network server including: a number processing unit for receiving a numeric code from an external source, interpreting the numeric code, extracting a device identifier and/or a contents identifier, activating a reproducing/recording device using the device identifier, and selecting contents to be reproduced/recorded using the contents identifier; and a network interface transmitting a device activation command that contains the device identifier and a contents reproducing/recording command that contains the contents identifier.

According to another aspect of the present invention, there is provided a user interface including: an input receiving unit for receiving a numeric code comprising a device identifier corresponding to a predetermined reproducing/recording device and/or a contents identifier corresponding to contents to be reproduced/recorded by the reproducing/recording device; and a transmitting unit for transmitting the numeric code to the reproducing/recording device or a home network server.

For a better understanding of the invention, and to show how embodiments of the same may be carried into effect, reference will now be made, by way of example, to the accompanying diagrammatic drawings in which:
FIG. 1 illustrates a conventional method of selecting contents of an AV device and reproducing/recording the contents;
FIGS. 2A and 2B illustrate examples of the conventional method of selecting the contents;
FIG. 3 illustrates a configuration of a numeric code required for device change and content selection according to an exemplary embodiment of the present invention;
FIGS. 4A and 4B illustrate an example of device change and content selection using the numeric code of FIG. 3;
FIG. 5 illustrates the configuration of a numeric code needed for device change and content selection according to another exemplary embodiment of the present invention;
FIGS. 6A and 6B illustrate an example of device change and content selection using the numeric code of FIG. 5;
FIG. 7 is a flowchart illustrating a method of selecting contents using a numeric code and reproducing/recording the contents according to the present invention;
FIGS. 8A through 8C illustrate various applications of an apparatus for reproducing/recording contents selected using a numeric code according to the present invention;
FIG. 9 is a block diagram of a numeric code processing unit included in a reproducing/recording apparatus or a home network server according to the present invention; and
FIGS. 10A through 10C are block diagrams of an AV device and home network systems for selecting the contents using a numeric code and reproducing/recording the selected contents according to the present invention.

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

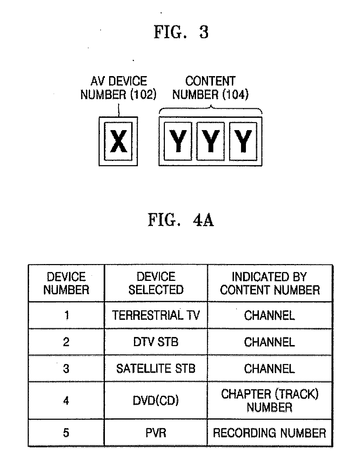

FIG. 3 illustrates a configuration of a numeric code required for device change and content selection according to an exemplary embodiment of the present invention. Referring to FIG. 3, for simultaneous device activation and content selection, the numeric code includes an audio-visual (AV) device number 102, i.e., an identifier of an AV device for reproducing/recording contents, and a content number 104, i.e., an identifier of contents to be reproduced/recorded by the AV device.

Unique numeric codes are assigned to all connected AV devices and contents provided by the AV devices, respectively. FIG. 3 illustrates a maximum four-digit numeric code, a first digit indicating the AV device number 102, and the following three digits indicating the content number 104. If a four-digit numeric code is received, an AV device is changed and its contents are selected simultaneously. If a three-digit or smaller numeric code is received, contents are selected in a currently activated AV device without changing the currently activated AV device to another AV device.

With reference to a mapping table to be described later, a user can input series of numbers using a user interface such as a remote controller and select a desired AV device and contents thereof. Therefore, the user can simultaneously activate the desired AV device to reproduce/record contents and select desired contents by inputting only a sequential number.

More specifically, the AV device number 102 is a unique identification number assigned to an AV device to reproduce/record contents. A unique identification number of an AV device may be designated in the following ways: 1) a user may arbitrarily designate a unique number for an AV device, 2) a specific number may be assigned to a specific type of device (for example, 1 may be assigned to a terrestrial TV, 2 may be assigned to a cable STB, 3 may be assigned to a satellite STB, and 4 may be assigned to a DVD player), or 3) a unique identification number may be given according to the number of a terminal connected to each AV device (for example, 1 may be given to external input 1 and 2 may be given to external input 2).

The content number 104 is a unique identifier of contents in a selected AV device. Even the same content number has different meanings depending on the AV device number 102. For example, if the content number 104 is 2, it may denote a channel number in the case of terrestrial TVs, cable STBs or satellite STBs, or a chapter number or a track number in the case of reproducing/recording devices such as DVD or CD players. In addition, it may denote an order of recording time in the case of personal video recorders (PVRs) or audio-visual hard disk drivers (AV-HDDs). In other words, an interpretation of the content number 104 changes according to whichever AV device is selected.

A user interface used in the present invention may be a number input device such as a remote controller and a front panel. Such a user interface includes number keys 0 through 9.

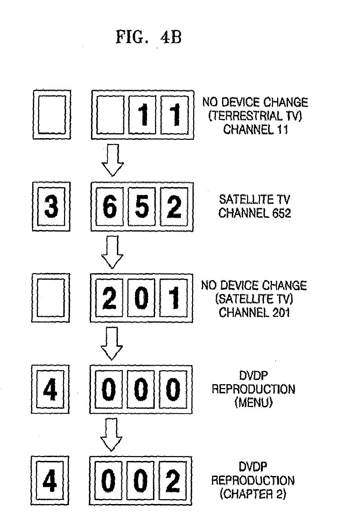

More specifically, FIGS. 4A and 4B illustrate an example of device change and content selection using the numeric code of FIG. 3. Referring to FIG. 4A, a mapping table of the AV device number 102 described above is illustrated. As the AV device number 102, 1 is assigned to a terrestrial TV, 2 is assigned to a DTV STB, 3 is assigned to a satellite STB, 4 is assigned to a DVD or CD player, and 5 is assigned to a PVR. As illustrated by "indicated by content number" in the rightmost column of the table, if an AV device number is selected, the content number 104 is interpreted as one of a channel number, a chapter number, a track number, or a recording number according to the type of an AV device corresponding to the selected AV device number.

Referring to FIG. 4B, an example of device change and content selection according to a numeric code input through the user interface is illustrated. A case where numeric code 11 is entered will be described. The first digit denotes the AV device number 102. Since no information is input to the first digit, there is no change of AV device. The following three digits denote the content number 104. Since there is no change of AV device, channel 11, i.e., the content number 104 in a currently activated device, for example, a terrestrial television, is selected.

If a numeric code 3652 is input, since the AV device number 102 is 3, the terrestrial TV is deactivated and the satellite STB is activated with reference to the mapping table of FIG. 4A. In addition, since the content number 104 is 652, channel 652 is selected.

Next, a numeric code 201 denotes that the satellite STB continues to be used and channel 201 is selected in the satellite STB. A numeric code 4000 denotes that the satellite STB is deactivated and the DVD player is activated. If the content number 104 is 000, a reproduction menu screen is displayed. Further, a numeric code 4002 denotes that a second chapter of the DVD player is selected.

As described above, by inputting a sequential numeric code, a user can easily and quickly change an AV device and select contents to reproduce/record without having to use complicated menus or remote control keys. In other words, a beginner user who usually only uses several specific functions can memorize several numeric codes that the user frequently uses, similar to memorizing telephone numbers, and reproduce/record desired contents using a desired AV device by simply inputting these numeric codes. In addition, an experienced user can quickly manipulate an AV device by inputting simple numeric codes, e.g., using shortcut function keys, instead of using multistage menus and remote control keys.

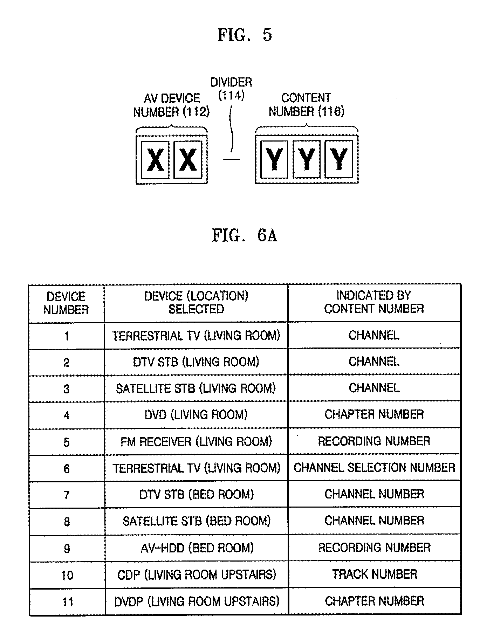

FIG. 5 illustrates the configuration of a numeric code needed for device change and content selection according to another exemplary embodiment of the present invention. Referring to FIG. 5, the numeric code includes a 2-digit AV device number 112, a divider 114, and a 3-digit content number 116. A 2-digit number before the divider 114 indicates the AV device number 112 and a 3-digit number after the divider 114 indicates the content number 116. Accordingly, ten or more AV devices can be described. Further, since the divider 114 is used, the numeric code can be interpreted even when it is compose of less than 5 digits.

With reference to a mapping table to be described later, a user can input a sequential number using a user interface such as a remote controller and select a desired AV device and contents. Therefore, the user can simultaneously activate the desired AV device to reproduce/record contents and select desired contents by inputting only a sequential number.

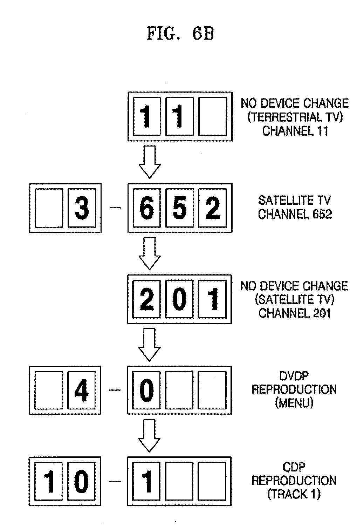

FIGS. 6A and 6B illustrate an example of device change and content selection using the numeric code of FIG. 5. Referring to FIG. 6A, a mapping table of the AV device number 112 described above is illustrated. In this example, a unique identification number is assigned according to a location as well as a type of AV device. In other words, as the AV device number 112, 1 is assigned to a terrestrial TV in the living room, 2 is assigned to a DTV STB in the living room, 7 is assigned to a DTV STB in the bedroom, and 11 is assigned to a DVD player in the living room upstairs. As illustrated by "indicated by content number" in the rightmost column of the table, if an AV device number is selected, the content number 116 is interpreted as one of a channel number, a chapter number, a track number, or a recording number according to the type of an AV device corresponding to the selected AV device number.

Referring to FIG. 6B, an example of device change and content selection according to a numeric code input through the user interface is illustrated. A case where numeric code 11 is input will be described. Since numeric code 11 is input without the divider 114, there is no change of AV device. Thus, channel 11, i.e., the content number 116 in a currently activated device, for example, a terrestrial television, is selected.

If a numeric code 3-652 is input, 3 before the divider 114 denotes the satellite STB in the living room and 652 after the divider 114 denotes channel 652 of the satellite STB. If numeric code 201 is input, since it does not have the divider 114, the satellite STB continues to be used and channel 201 of the satellite STB is selected. If numeric code 4-0 is input, the satellite STB is deactivated and the DVD player in the living room is activated. In addition, since 0 indicates a 0th chapter, a reproduction menu screen is displayed. Further, if numeric code 10-1 is input, the DVD player in the living room is deactivated and the CD player in the living room upstairs is activated. Then, a first track of the CD player is reproduced.

The numeric codes illustrated in FIGS. 3 and 5 are just exemplary embodiments of the present invention and can be configured differently using various methods.

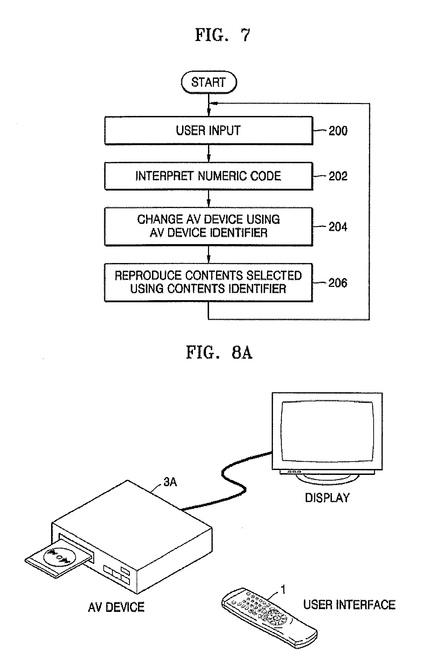

A method of selecting contents using a numeric code and reproducing/recording the contents according to the present invention will now be summarized. FIG. 7 is a flowchart illustrating a method of selecting contents using a numeric code and reproducing/recording the contents according to the present invention.

Referring to FIG. 7, a user inputs a numeric code indicating an AV device and contents to be reproduced/recorded (operation 200). The input numeric code is interpreted as illustrated in FIGS. 3 through 6B, and an AV device identifier and a contents identifier are extracted (operation 202). An AV device is changed using the extracted AV device identifier (operation 204). Contents selected using the extracted contents identifier are reproduced/recorded (operation 206).

FIGS. 8A through 8C illustrate various applications of an apparatus for reproducing/recording contents selected using a numeric code according to the present invention.

FIG. 8A illustrates an example of selecting contents from an AV device 3A using a numeric code according to an exemplary embodiment of the present invention. When a user inputs a numeric code through a user interface 1, the AV device 3A interprets the numeric code, sets an external input number to an AV device number included in the numeric code, and reproduces/records a channel, an audio-visual image, a chapter, or a track corresponding to a content number included in the numeric code. As described above, the user interface 1 used in the present invention may be a number input device such as a remote controller and a front panel and includes number keys 0 through 9.

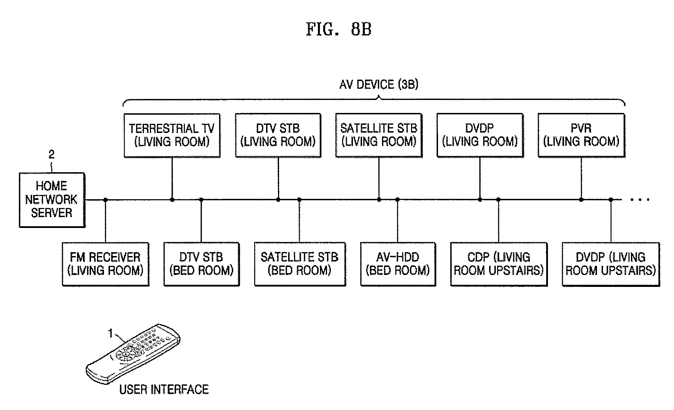

FIG. 8B illustrates a centralized home network system in which a home network server 2 controls a plurality of AV devices 3B according to another exemplary embodiment of the present invention. When a user inputs a numeric code through a user interface 1, the home network server 2 interprets the numeric code, extracts an AV device number and a content number included in the numeric code, selects an AV device from the AV devices 3B, and contents using the extracted AV device number and the content number, and transmits a control command to the selected AV device to reproduce/record the selected contents. The selected AV device receives the control command and reproduces/records the selected contents.

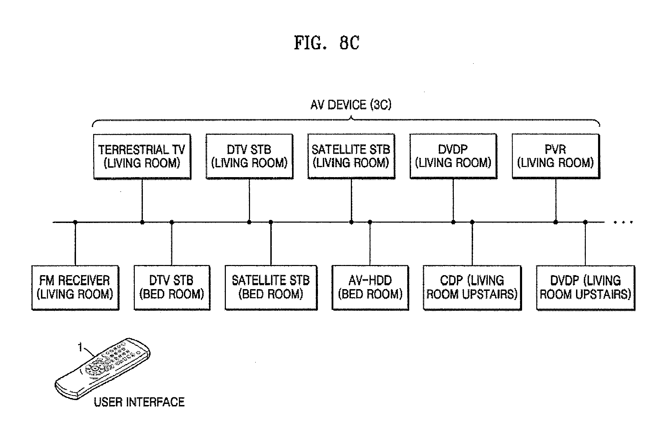

FIG. 8C illustrates a distributed home network system, without a home network server 2, in which one of a plurality of AV devices 3C controls itself and other AV devices 3C using controllers respectively included in the AV devices 3C according to another exemplary embodiment of the present invention. When a user inputs a numeric code through a user interface 1, one of the AV devices 3C, which receives the numeric code, interprets the numeric code, extracts an AV device number and a content number included in the numeric code, determines whether the extracted AV device number matches its own device number, and reproduces/records selected contents if it is determined that the extracted AV device number matches its own device number.

If it is determined that the extracted AV device number does not match the device number of the AV device, the AV device transmits a control command to an AV device corresponding to the extracted AV device number to reproduce/record selected contents. The AV device that receives the control command reproduces/records the selected contents.

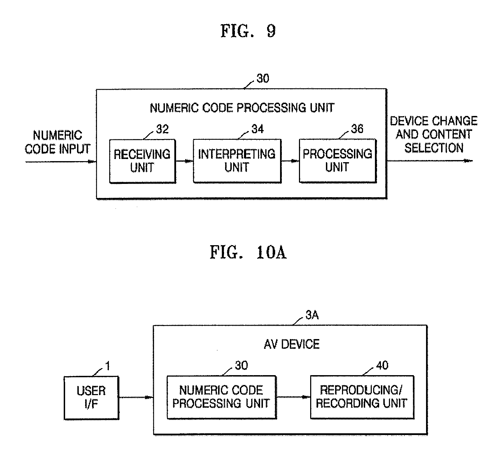

FIG. 9 is a block diagram of a numeric code processing unit 30 included in a reproducing/recording apparatus or a home network server according to the present invention. Referring to FIG. 9, the numeric code processing unit 30 includes a receiving unit 32, an interpreting unit 34, and a processing unit 36. The receiving unit 32 receives a sequential numeric code from a user interface 1 and transmits the numeric code to the interpreting unit 34. The interpreting unit 34 interprets the numeric code according to a code rule described with reference to FIGS. 3 through 6B and extracts an AV device number and a content number. The processing unit 36 activates an AV device corresponding to the extracted AV device number and selects contents corresponding to the extracted content number. Although not shown, the activated AV device reproduces/records the selected contents.

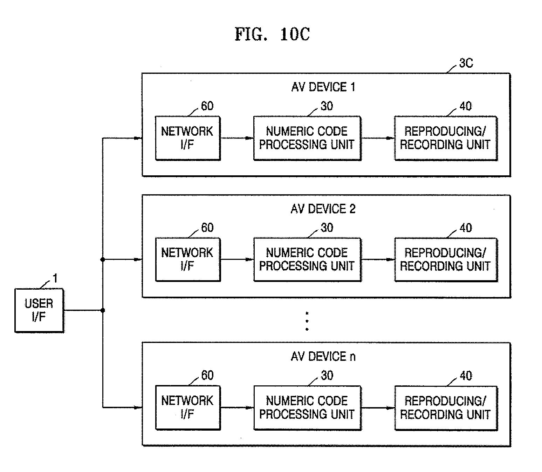

FIGS. 10A through 10C are block diagrams of the AV device and home network systems for selecting contents using a numeric code and reproducing/recording the selected contents according to the present invention. FIG. 10A is a block diagram of the AV device 3A illustrated in FIG. 8A. The AV device 3A includes a numeric code processing unit 30 receiving a numeric code through a user interface 1, interpreting the numeric code according to the code rule described above, and extracting an AV device number and a content number, and a reproducing/recording unit reproducing/recording contents corresponding to the selected content number.

The AV device number is interpreted as an external input number. Accordingly, when a user inputs a numeric code through the user interface 1 such as a remote controller, the AV device 3A interprets the numeric code, sets the external input number to an AV device number included in the numeric code, and reproduces/records a channel, an AV image, a chapter, or a track corresponding to a content number included in the numeric code.

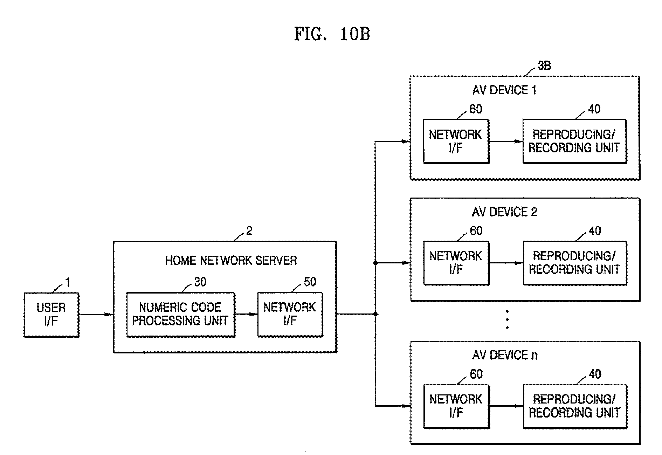

FIG. 10B is a block diagram of the centralized home network system of FIG. 8B. The home network server 2 includes a numeric code processing unit 30 receiving a numeric code through the user interface 1, interpreting the numeric code according to the code rule described above and extracting an AV device number and a content number, and a network interface 50 transmitting a reproducing/recording command to an AV device using the extracted AV device number and content number.

Each of the AV devices 3B, which corresponds to an AV device number, receives a reproducing/recording command through a network interface 60 using an extracted AV device number and content number and reproduces/records selected contents using a reproducing/recording unit 40.

The present exemplary embodiment provides the centralized home network system in which the home network server 2 interprets a numeric code and transmits a reproducing/recording command to a corresponding AV device, which then reproduces/records selected contents in response to the command transmitted from the home network server 2.

FIG. 10C is a block diagram of the distributed home network system of FIG. 8C. Since the distributed home network system does not have a home network server, each of the AV devices 3C controls the reproducing/recording operations of itself and other AV devices 3C. Each of the AV devices 3C includes a numeric code processing unit 30 receiving a numeric code through the user interface 1, interpreting the numeric code according to the code rule described above and extracting an AV device number and a content number, a network interface 60 transmitting or receiving a reproducing/recording command to or from an AV device using the extracted AV device number and content number, and a reproducing/recording unit 40 reproducing/recording selected contents.

Accordingly, when a user inputs a numeric code through the user interface 1, one of the AV devices 3C, which receives the numeric code, interprets the numeric code, extracts an AV device number and a content number included in the numeric code, determines whether the extracted AV device number matches its own device number, and reproduces/records selected contents if it is determined that the extracted AV device number matches its own device number.

If it is determined that the extracted AV device number does not match the device number of the AV device, the AV device transmits a control command to an AV device corresponding to the extracted AV device number to reproduce/record selected contents. The AV device that receives the control command reproduces/records the selected contents.

As described above, the present invention provides a multimedia reproducing/recording device and a method of selecting a multimedia reproducing/recording device and multimedia contents and reproducing/recording the multimedia contents more quickly and easily. Therefore, it is not necessary for people who are unfamiliar with OSD menus and manipulating remote control keys to learn how to use complicated menus. They can select desired contents and reproduce/record the desired contents with simple manipulation of number keys. In addition, those who are familiar with OSD menus can select contents more quickly.

The present invention can also be implemented as a computer program. Codes and code segments constituting the computer program can be easily construed by programmers skilled in the art to which the present invention pertains.

Also, the computer program is recorded on a computer-readable recording medium and thereafter read by a computer system. Examples of the computer-readable recording medium include magnetic tapes, floppy disks, optical data storage devices, and carrier waves.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of selecting contents and reproducing or recording the selected contents, the method comprising:
receiving a numeric code from an external source; and
interpreting the numeric code and extracting a device identifier (102) corresponding to a predetermined reproducing or recording device and/or a content identifier (104) corresponding to a content to be reproduced or recorded by the predetermined reproducing or recording device.

2. The method of claim 1, further comprising:
activating the predetermined reproducing or recording device using the device identifier (102); and
selecting the content to be reproduced or recorded using the content identifier (104) and reproducing or recording the content.

3. The method of claim 1 or claim 2, further comprising:
receiving a device activation command comprising the device identifier (102); and
receiving a content reproducing or recording command comprising the content identifier (104).

4. The method of any preceding claim, wherein the numeric code comprises a first identification number and a second identification number assigned to the predetermined reproducing or recording device and the content to be reproduced or recorded, respectively.

5. The method of any preceding claim, wherein digits of the numeric code comprise information regarding whether a new reproducing or recording device will be activated and a new content will be selected in the new reproducing or recording device or whether a currently activated reproducing or recording device will continue to be used and a content of the currently activated reproducing or recording device will be selected.

6. The method of any preceding claim, wherein even when an identical number is used in a portion of the numeric code for indicating the content, the identical number has a different meaning according to a selected reproducing or recording device.

7. The method of claim 6, wherein even when the identical number is used in the portion of the numeric code for indicating the content, the identical number indicates a channel number, a chapter number, a track number, or a recording number according to the selected reproducing or recording device.

8. A reproducing or recording device for selecting contents and reproducing the selected contents, the device comprising:
a number processing unit (30) for receiving a numeric code from an external source, for interpreting the numeric code, for extracting a device identifier (102) and/or a content identifier (104), comparing the extracted device identifier (102) with a device identifier (102) of the reproducing or recording device, activating the reproducing or recording device if the extracted device identifier (102) matches the device identifier (102) of the reproducing or recording device, and selecting a content to be reproduced or recorded using the content identifier (104); and
a reproducing unit (40) for reproducing the selected content using the activated reproducing or recording device.

9. The device of claim 8, further comprising a network interface (50/60) for receiving a device activation command and a content reproducing or recording command, the device activation command comprising the device identifier (102), and the content reproducing or recording command comprising the content identifier (104).

10. The device of claim 8 or claim 9, wherein the numeric code comprises a first identification number and a second identification number assigned to the reproducing or recording device (40) and the content to be reproduced or recorded, respectively.

11. The device of any one of claims 8 to 10, wherein digits of the numeric code comprise information regarding whether a new reproducing or recording device (40) will be activated and a new content will be selected in the new reproducing or recording device (40) or whether a currently activated reproducing or recording device (40) will continue to be used and a content of the currently activated reproducing or recording device (40) will be selected.

12. The device of any one of claims 8 to 11, wherein even when an identical number is used in a portion of the numeric code for indicating the content, the identical number has a different meaning according to a selected reproducing or recording device (40).

13. The device of claim 12, wherein even when the identical number is used in the portion of the numeric code for indicating the content, the identical number indicates a channel number, a chapter number, a track number, or a recording number according to the selected reproducing or recording device (40).

14. A home network server comprising:
a number processing unit (30) for receiving a numeric code from an external source, interpreting the numeric code, extracting a device identifier (102) and/or a content identifier (104), activating a reproducing or recording device (40) using the device identifier (102), and selecting a content to be reproduced or recorded using the content identifier (104); and
a network interface (50/60) for transmitting a device activation command and a content reproducing or recording command, the device activation command comprising the device identifier (102) and the content reproducing or recording command comprising the content identifier (104).

15. The home network server of claim 14, wherein the numeric code comprises a first identification number and a second identification number assigned to the reproducing or recording device (40) and the content to be reproduced or recorded, respectively.

16. The home network server of claim 14 or claim 15, wherein digits of the numeric code comprise information regarding whether a new reproducing or recording device (40) will be activated and a new content will be selected in the new reproducing or recording device (40) or whether a currently activated reproducing or recording device (40) will continue to be used and a content of the currently activated reproducing or recording device (40) will be selected.

17. The home network server of any one of claims 14 to 16, wherein even when an identical number is used in a portion of the numeric code for indicating the content, the identical number has a different meaning according to a selected reproducing or recording device (40).

18. The home network server of claim 17, wherein even when the identical number is used in the portion of the numeric code for indicating the content, the identical number indicates a channel number, a chapter number, a track number, or a recording number according to the selected reproducing or recording device (40).

19. A user interface comprising:
an input receiving unit for receiving a numeric code comprising a device identifier (102) corresponding to a predetermined reproducing or recording device (40) and/or a content identifier (104) corresponding to a content to be reproduced or recorded by the predetermined reproducing or recording device (40); and
a transmitting unit for transmitting the numeric code to the predetermined reproducing or recording device (40) or a home network server.

20. The user interface of claim 19, wherein the numeric code comprises a first identification number and a second identification number assigned to the predetermined reproducing or recording device (40) and the content to be reproduced or recorded, respectively.

21. The user interface of claim 19 or claim 20, wherein digits of the numeric code comprise information regarding whether a new reproducing or recording device (40) will be activated and a new content will be selected in the new reproducing or recording device (40) or whether a currently activated reproducing or recording device (40) will continuously be used and a content of the currently activated reproducing or recording device (40) will be selected.

22. The user interface of any one of claims 19 to 21, wherein even when an identical number is used in a portion of the numeric code for indicating content, the identical number has different meanings according to a selected reproducing or recording device (40).

23. The user interface of any one of claims 19 to 22, wherein even when the identical number is used in the portion of the numeric code for indicating content, the identical number indicates a channel number, a chapter number, a track number, or a recording number according to the selected reproducing or recording device (40).
